# EUROPEAN PATENT APPLICATION

(11) **EP 4 576 914 A1**
(43) Date of publication of application: **25.06.2025**
(21) Application number: 23218792.2
(22) Date of filing: 20.12.2023
(51) Int. Cl.: H04W 72/543, H04W 84/12

(54) **METHOD OF SCHEDULING RESOURCES IN A COMMUNICATION NETWORK BASED ON A QUALITY OF SERVICE REQUIREMENT**

(71) Applicant: Robert Bosch GmbH, 70442 Stuttgart (DE)
(72) Inventor: Suer, Marie-Theres, 38102 Braunschweig (DE); Guillaume, Rene, 71032 Boeblingen (DE)

(57) **Abstract**

Method of scheduling resources in a communication network (10) based on a quality of service (QoS) requirement of an application of the communication network (10), wherein the communication network (10) comprises a wireless Local Area Network (LAN) (12a, 12b) and the method comprises:
- Receiving, by a first wireless LAN element (18a, 18b), preferably an access point (18a, 18b) of the wireless LAN (12a, 12b), a requirement information containing a QoS requirement of the application regarding
∘ a maximum time between successful transmissions of consecutive data packets in the wireless LAN (12a, 12b) and/or
∘ a maximum number of consecutive data packet losses in the wireless LAN (12a, 12b)
from a second wireless LAN element (16a, 16b), preferably a station (16a, 16b) of the wireless LAN (12a, 12b); and
- Scheduling resources, by the first wireless LAN element (18a, 18b), preferably the access point (18a, 18b), based on the QoS requirement contained in the received requirement information.

## Description

The invention concerns a method of scheduling resources in a communication network based on a quality of service requirement of an application of the communication network, and a corresponding method of transmitting and/or receiving a data packet in a communication network using resources scheduled based on a quality of service (QoS) requirement of an application of the communication network. Further, the invention concerns a first wireless Local Area Network (LAN) element, a second wireless LAN element, a computer program, and a non-transitory computer readable medium. Moreover, the invention concerns a frame body of a frame in a communication network.

### Background

IEEE 802.11 be alias Wi-Fi 7 introduces a mechanism for clients to specify their application requirements to the network via a mechanism called stream classification service (SCS). This mechanism uses a QoS characteristics element to describe these requirements. Thereby, the QoS characteristics of traffic streams can be characterized by the definition of "service intervals", i.e., inter-message-gaps, and maximum frame and burst sizes. The requirements of the traffic stream can be defined by specifying, e.g., a delay bound and a required delivery ratio. The access point can use the information provided by the SCS mechanism to adapt the orthogonal frequency division multiple access (OFDMA) scheduling in uplink (UL) and downlink (DL) and/or the target wake time (Target Wake Time) schedule to achieve the specified QoS requirements.

### Disclosure of the invention

According to a first aspect, there is provided a method of scheduling resources in a communication network based on a QoS requirement of an application of the communication network, wherein the communication network comprises a wireless LAN.

The method according to the first aspect comprises:
- Receiving, by a first wireless LAN element, preferably an access point of the wireless LAN, a requirement information containing a QoS requirement of the application regarding
   ∘ a maximum time between successful transmissions of consecutive data packets, preferably MAC Service Data Units, in the wireless LAN and/or
   ∘ a maximum number of consecutive data packet, preferably MAC Service Data Units, losses in the wireless LAN
   from a second wireless LAN element, preferably a station of the wireless LAN; and
- Scheduling resources, by the first wireless LAN element, preferably the access point, based on the QoS requirement contained in the received requirement information.

The method according to the first aspect can be understood as a method of operating the first wireless LAN element, preferably an access point of the wireless LAN.

According to a second aspect, there is provided a method of transmitting and/or receiving a data packet in a communication network using resources scheduled based on a QoS requirement of an application of the communication network.

The method according to the second aspect comprises:
- Transmitting a requirement information containing a QoS requirement of the application regarding
   ∘ a maximum time between successful transmissions of consecutive data packets, preferably MAC Service Data Units, in the wireless LAN and/or
   ∘ a maximum number of consecutive data packet, preferably MAC Service Data Units, losses in the wireless LAN
   to a first wireless LAN element, preferably an access point of the wireless LAN, by a second wireless LAN element, preferably a station of the wireless LAN; and
- Transmitting and/or receiving, by the second wireless LAN element, a data packet of the application using resources scheduled by the access point based on the QoS requirement contained in the transmitted requirement information.

The method according to the second aspect can be understood as a method of operating the second wireless LAN element, preferably a station of the wireless LAN.

According to a third aspect, there is provided a first wireless LAN element, preferably an access point of a wireless LAN. The first wireless LAN element comprises
- a radio modem,
- a non-transitory computer readable medium comprising machine-readable instructions, and
a processor configured to load and to execute the machine-readable instructions to cause the first wireless LAN element, preferably the access point, to execute the method according to the first aspect, or its embodiments.

According to a fourth aspect, there is provided a second wireless LAN element, preferably a station of a wireless LAN. The second wireless LAN element comprises
- a radio modem,
- a non-transitory computer readable medium comprising machine-readable instructions, and
a processor configured to load and to execute the machine-readable instructions to cause the second wireless LAN element, preferably the station, to execute the method according to the second aspect, or its embodiments.

According to a fifth aspect, there is provided a computer program comprising machine-readable instructions to cause
- the first wireless LAN element, preferably the access point, as defined by the third aspect to execute the method according the first aspect, and/or its embodiments, and/or
- the second wireless LAN element, preferably the station, as defined by the fourth aspect to execute the method according the second aspect, and/or its embodiments.

According to a sixth aspect, there is provided a non-transitory computer readable medium having stored thereon the computer program as defined by the fifth aspect.

According to a seventh aspect, there is provided a frame body, specifically a stream classification service request frame body, of a frame in a communication network comprising a wireless LAN, wherein
- the frame body comprises a plurality of fields,
- at least one of the fields, preferably a stream classification service descriptor element field, comprises a QoS characteristics element with a requirement information, and
- the requirement information contains a QoS requirement of an application of the communication network regarding
   ∘ a maximum time between successful transmissions of consecutive data packets in the wireless LAN and/or
   ∘ a maximum number of consecutive data packet losses in the wireless LAN
   for scheduling resources, by the wireless LAN element, preferably an access point of the wireless LAN, based on the QoS requirement.

The frame body can be embodied in a data structure comprising the said plurality of data fields.

The communication network may be configured as a time sensitive network (TSN). The TSN may comprise at least one wired TSN domain, e.g., consisting of an Ethernet network according to IEEE 802.3, and at least one wireless TSN domain, e.g., consisting of the wireless LAN. The wireless LAN may be a WiFi network, preferably according to IEEE 802.11 be.

The communication network comprises at least one first wireless LAN element, preferably an access point of the wireless LAN, and at least one second wireless LAN element, preferably a station of the wireless LAN.

Here, the first wireless LAN element can be configured to receive data packets from and/or transmit data packets to the second wireless LAN element via a wireless LAN link, e.g., a WiFi link. Further, the first wireless LAN element can be configured to receive and/or transmit data packets via a wired link, e.g., a wired TSN link. Preferably, the requirement information is received via the wireless link of the wireless LAN.

The second wireless LAN element may be a mobile station, preferably an end device like a user equipment. The second wireless LAN element can be configured to receive data packets from and/or transmit data packets to the first wireless LAN element via a wireless LAN link, e.g., a WiFi link.

A data packet can be understood as a frame comprising or consisting of a frame body. Preferably, the data packet is configured as a MAC Service Data Unit (MSDU). In other words, the data packet can be a data packet received in the MAC layer from an upper layer. The data packet can be part of a data unit, preferably a MAC Protocol Data Unit (MPDU), which comprises a header, a frame body with the data packet and a frame check sequence.

The time between successful transmissions of consecutive data packets in the wireless LAN can be understood as a time difference between the successful reception of consecutive data packets transmitted in the wireless LAN. A successful transmission can be defined as a transmission that is successful both content-wise and timewise. More precisely, a successful transmission can be considered as a transmission in which the data packet is transmitted correctly, i.e., without error, and received within a predefined time or predefined deadline. Specifically, the maximum time and/or the maximum number refers to data packets exchanged between the first and the second wireless LAN element.

A consecutive data packet loss can be understood as corresponding to two consecutive data packets that are not transmitted successfully, i.e., that are received not within the predefined-time and/or not transmitted correctly, i.e., with error. A successful transmission may be a transmission which is acknowledged explicitly or implicitly, particularly by transmitting an acknowledgement (ACK). A packet loss may be detected by the first wireless LAN element, preferably the access point, and/or by a network element representing a listener of receiving part of the application. In the latter case, the network element may report the detected packet loss and/or successful transmissions to the first wireless LAN element.

The maximum time between successful transmissions of consecutive data packets in the wireless LAN and/or the maximum number of consecutive data packet losses in the wireless LAN may depend on a survival time of the application, i.e., a time the application may run without reception of a (valid) data packet. Here, only the amount of time that is accounted to the wireless LAN link is considered. In other words, the maximum time and/or the maximum number defines a time and/or number respectively which is acceptable to or tolerable by the application. For an application with periodic data transmission, the requirement regarding the maximum time can be derived from the requirement regarding the maximum number and vice versa.

The requirement information may contain the QoS requirement(s) explicitly or implicitly, by indicating or representing the respective requirement. To this end, in a basic variant, the QoS requirement information may comprise a field containing the maximum number of tolerable consecutive packet losses and/or the maximum time between successful transmissions. Preferably, the QoS requirement regards a statistics on the maximum time between successful transmissions of consecutive data packets in the wireless LAN and/or a statistics on the maximum number of consecutive data packet losses in the wireless LAN.

To account for the received QoS requirement of the application resources for transmitting and/or receiving data packets of the application in the wireless LAN are scheduled based on the QoS requirement contained in the received requirement information. Scheduling resources preferably comprises allocating radio resources for transmitting and/or receiving data packets in the wireless LAN. The scheduled resources are used, by the second wireless LAN element, for transmitting and/or receiving data packets of the application. Scheduling resources may also include assigning resources for transmitting duplicated data packets via different links, adapting a modulation and coding scheme, requesting to refrain from retransmissions etc.

The introduced methods allow for a transmission of data in a wireless LAN that accounts for the QoS requirements of an application regarding the maximum number of consecutive packet losses and/or the maximum time between successful transmission of consecutive packets. The consideration of consecutive packet losses is particularly beneficial for mission critical applications, especially in the industrial automation domain, for which application outages may have severe consequences. The proposed methods increase the reliability of such applications and allow to distribute resources of communication systems more efficiently by addressing the application's QoS requirements regarding consecutive packet losses. In particular, the invention allows for introducing a survival time metrics in IEEE 802.11 networks.

According to an embodiment of the first aspect, the method further comprises a step of determining, by the first wireless LAN element, preferably the access point, a current QoS of the wireless LAN represented by
- the time between successful transmissions of consecutive data packets in the wireless LAN and/or
- the number of consecutive data packet losses in the wireless LAN,
wherein the resources are scheduled further based on the determined current QoS. Here, the current QoS may comprise a statistics on the current or actual time between successful transmissions of consecutive data packets in the wireless LAN and/or a statistics on the current or actual number of consecutive data packet losses in the wireless LAN.

Preferably, the percentage at which a specific number of consecutive losses is exceeded should be measured over a certain time period. At the end of this period the measured percentages can be compared with the QoS requirement. In case the required percentages were exceeded, i.e., too many consecutive losses happened, scheduling resources may specifically address streams of data packets for which the requirements are not met.

This allows to detect deviations of the current QoS from the required QoS and to account for the detected deviations when scheduling resources, thus further reducing application outages.

According to an embodiment of the first aspect, the method further comprises:
- Obtaining, by the first wireless LAN element, a network information representing a configuration and/or property of the communication network; and
- Determining, by the first wireless LAN element, a predicted QoS of the wireless LAN represented by
   ∘ the time between successful transmissions of consecutive data packets and/or
   ∘ the number of consecutive data packet losses in the wireless LAN based on the obtained network information,
   wherein the resources are scheduled further based on the determined predicted QoS.

The network information may comprise of at least one network parameter representing or characterizing a configuration and/or a property of the communication network, specifically of the wireless LAN. The network parameter can be selected from a group comprising: Signal strength, number of interfering networks, network load, number of clients, channel busy ratio (CBR), network capacity, e.g., bandwidth, etc.

For determining the predicted QoS a look-up table may be used assigning values of network parameters to a predicted QoS, specifically to expected consecutive loss probabilities. The expected consecutive loss probabilities could then be extracted from the look-up table for the observed network parameters. As an alternative to the look-up table, a trained machine learning model, specifically a neural network, could be used to predict the expected consecutive loss probabilities based on the network parameters.

This allows to detect deviations of the predicted QoS from the required QoS and to account for the detected deviations, i.e., to anticipate future deviations of the QoS from the required QoS, and to proactively account for the future deviations when scheduling resources, thus proactively reducing application outages.

According to an embodiment of the first aspect, the method further comprises a step of comparing, by the first wireless LAN element, the determined current and/or predicted QoS and the QoS requirement, wherein in case the comparison indicates an imminent or actual violation of the QoS requirement, the scheduling of resources comprises at least one adaption measure to fulfill the QoS requirement. To identify an imminent or actual violation of the QoS requirement, a counter representing a current number of consecutive losses may be used by the first wireless LAN element. For each traffic stream a separate counter may be used. If the counter reaches a value close to the specified maximum number of acceptable consecutive data packet losses, i.e., a difference between a current value of the counter and the specified maximum number is smaller than a defined threshold, the adaption measure or countermeasure may be carried out or initiated by the first wireless LAN element to prevent the consecutive loss threshold to be exceeded.

Here, the adaption measure may include at least one of:
- Increasing a priority of, specifically a stream of, data packets of the application and/or assigning additional resources for transmitting the data packets of the application, specifically using Orthogonal Frequency-Division Multiple Access (ODFMA) scheduling;
- Duplicating specific or all data packets of the application and transmitting the duplicated data packets via different links in the communication network, specifically in the wireless LAN;
- Decreasing an order of a modulation and coding scheme (MCS) used for transmitting specific or all data packets of the application;
- Adapting a timer deadline for retransmissions of specific or all data packets of the application.

Here, the priority may be increased for specific or all data packets of the application. Particularly, a higher priority might be given to critical streams in ODFMA scheduling. Consequently, the corresponding traffic streams are scheduled with higher priority and/or additional resources are allocated to the critical streams.

For the transmission of duplicated data packets, as an example, IEEE 802.11 be multi-link operation (MLO) may be used. Decreasing the MCS order, i.e., using a lower MCS, for data packets of critical streams allows to increase the probability of a successful transmission on the first attempt. The timer deadline for retransmissions may be adapted in dependence on a specified deadline and/or in dependence on a specified survival time of the application.

This allows to avoid or immediately react to violations of the QoS requirement, thus effectively increasing the reliability of the application.

According to an embodiment of the first and/or second aspect, the QoS requirement represents
- a maximum time between successful transmissions of two consecutive data packets in the wireless LAN and/or
- a maximum number of consecutive data packet losses in the wireless LAN
for a defined percentage of data packets transmitted in the wireless LAN. Here, the maximum time and/or the maximum number can be understood as a threshold which must not be exceeded by a defined percentage of data packets, or may only be exceeded by a defined percentage of data packets. The percentage of data packets may refer to a total number of data packets of the application transmitted in the wireless LAN, specifically within a specified period, or refer to a predefined number of consecutive data packets.

As an example, the QoS requirement may require a first defined percentage of data packets, e.g., 95%, to not exceed a first defined maximum number of losses, e.g., 1, and a second defined percentage of data packets, e.g., 99%, to not exceed a second defined maximum number of losses, e.g., 5. In other words, the QoS requirement may allow a first defined percentage of data packets, e.g., 5%, to exceed the first defined maximum number of losses, e.g., 1, and a second defined percentage of data packets, e.g., 1 %, to exceed the second defined maximum number of losses, e.g., 5.

This allows for further specifying the QoS requirement of the application regarding consecutive packet losses, and consequently for effectively allocating the resources to meet the specified QoS requirement.

According to an embodiment of the first and/or second aspect, the requirement information comprises
- at least one first data field representing, preferably comprising a defined maximum number of consecutive data packet losses and
- at least one second data field representing, preferably indicating a corresponding required percentage of data packets for which the number of consecutive data packet losses shall be smaller or equal to the defined maximum number.

Additionally or alternatively, the requirement information comprises
- at least one first data field representing, preferably comprising a defined maximum time between successful transmissions of two consecutive data packets and
- at least one second data field representing, preferably indicating a corresponding required percentage of data packets for which the time between successful transmission of two consecutive data packets shall be smaller or equal to the defined maximum time.

Here, the first data field may consist of an unsigned integer representing the defined maximum number of the defined maximum time.

The second data field may indicate the corresponding required percentage of data packets by using the same format a further data field of the requirement information, specifically a further data field representing an MSDU delivery ratio as defined in IEEE 802.11be. In other words, the subfields may contain information about the traffic stream requirements on the number of consecutive losses that the application can tolerate and/or contain the time the application keeps running with no failure without receiving a valid packet. Preferably, the requirement information contains multiple first and second data fields, each of them representing a maximum number or maximum time and the corresponding percentage of data packets, respectively. This allows for a particular efficient signaling of the QoS requirement.

According to an embodiment of the first and/or second aspect,
- the application requires a stream of data packets transmitted via the wireless LAN, and
- the requirement information is part of or configured as a QoS characteristics element, specifically of a SCS descriptor element, of a SCS request of the second wireless LAN element related to the required stream of data packets.

The stream of data packets may comprise a multimedia stream. Preferably, the stream can be understood as a unidirectional flow of data packets in the communication network.

The SCS descriptor element may be transmitted from the second wireless LAN element to the first wireless LAN element as part of an SCS request frame, thus initiating an SCS session. The SCS request frame may further comprise an SCS identifier and a descriptor for a classification rule to classify the data packets of the application. The SCS request may be accepted or rejected by the first wireless LAN element, specially by transmitting a SCS response frame to the second wireless LAN element.

The QoS characteristics element is preferably based on a QoS characteristics element as defined in IEEE 802.11be, including, e.g., flow identification, minimum and maximum service interval, maximum packet size, delay bound (deadline), MSDU Delivery Ratio, start time etc. According to this embodiment, the QoS characteristics element additionally represents the proposed QoS requirement regarding the consecutive packet losses. In other words, the QoS characteristics element is modified by adding a further subfield describing the consecutive loss requirements.

By providing the information about the consecutive loss requirements in the SCS element resources can be distributed more efficiently among the different clients and traffic flows by the access point, thus decreasing the probability of an application failure due to a missed survival time.

According to an embodiment of the first and/or second aspect, wherein
- the communication network further comprises a wired network, specifically a wired time sensitive network (TSN),
- the application requires a stream of data packets between
   ∘ the first wireless LAN element and/or a first network element of the communication network and
   ∘ the second wireless LAN element and/or a second network element of the communication network
   via the wired network and the wireless LAN,
- the QoS requirement contained in the requirement information is based on an end-to-end QoS (E2E QoS) requirement of the application regarding
   ∘ a maximum time between successful transmissions of consecutive data packets and/or
   ∘ a maximum number of consecutive data packet losses between
   ∘ the first wireless LAN element and/or the first network element and
   ∘ the second wireless LAN element and/or the second network element.

The first and second network element are configured to exchange data packets via the wired network and the wireless LAN. Preferably, the application requires a stream of data packets from a talking element or talker of the communication network to a listening element of listener of the communication network. The talker can be the second wireless LAN element, preferably the station of the wireless LAN, or the second network element of the communication network. The listener can be the first wireless LAN element, preferably the access point of the wireless LAN, or the first network element of the communication network. The talker is configured to send or transmit data packets via the wired network and the wireless LAN. The listener is configured to receive the data packets transmitted from the talker via the wired network and the wireless LAN.

The QoS requirement is preferably derived from the E2E QoS requirement of the application, specifically between a listener and a talker of the communication network. The QoS requirement for the wireless LAN may be derived statically, i.e., before running the application, or dynamically, during runtime of the application. To this end, a delay bound may be set for the wireless LAN, i.e., a maximum delay a data packet experiences in the wireless LAN. Setting a delay bound may include setting a primary and a secondary delay bound, wherein the primary delay bound is used as long as no violation of the QoS requirement is imminent and the secondary delay bound is used when an violation of the QoS requirement is imminent.

This allows to integrate the proposed packet loss probability metrics in a TSN comprising a wireless LAN, thus improving also the reliability of mission-critical TSN applications.

According to a further aspect of the invention, there is provided a communication network comprising a wireless LAN and preferably a wired time sensitive network (TSN), the communication network comprising the first wireless LAN element, preferably an access point of the wireless LAN, according to the third aspect and the second wireless LAN element, preferably a station of the wireless LAN, according to the fourth aspect.

According to a further aspect of the invention, there is provided a method of operating the communication network comprising a wireless LAN and preferably a wired time sensitive network (TSN). The method of operating the communication network comprises the steps of the method according to the first aspect, or its embodiments, and the steps of the method according to the second aspect, or its embodiments.

The non-transitory computer readable medium is preferably configured to store the computer program to be executed by a processor of the first LAN element and/or the second LAN element and/or the communication network. The non-transitory computer readable media may include RAM, ROM, EEPROM, and any other non-volatile storage device.

### Description of the figures

Exemplary embodiments of the present invention are depicted in the figures, which are not to be construed as limiting the claims, and are explained in greater detail below.
- Fig. 1: schematically illustrates the architecture of a communication network according to an aspect of the invention;
- Fig. 2A,B,C: schematically illustrate a frame body of a QoS characteristics element according to the seventh aspect;
- Fig. 3: schematically illustrates a stream of data packets in a communication network according to an aspect of the invention; and
- Fig. 4: schematically illustrates methods according to embodiments of the invention.

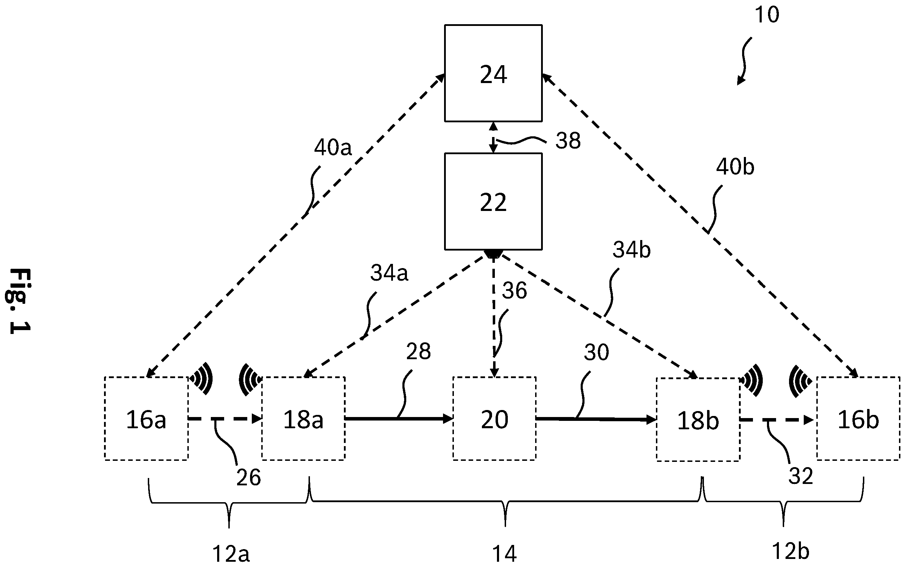

Fig. 1 schematically shows the architecture of a communication network 10 according to an aspect of the invention. The communication network 10 is configured as a time sensitive network (TSN) 10. The TSN 10 comprises two wireless TSN domains 12a, 12b and a wired TSN domain 14 connecting the two wireless TSN domains 12a, 12b.

Each of the wireless TSN domains 12a, 12b comprises at least two network elements 16a, 18a, 16b, 18b. Here, the wireless TSN domains 12a, 12b are wireless LANs 12a, 12b, specifically WiFi networks 12a, 12b. Accordingly, the at least two network elements 16a, 18a, 16b, 18b consist of stations 16a, 16b and access points 18a, 18b. The wired TSN domain 14 comprises a TSN bridge 20 or TSN switch 20. Further, the TSN 10 comprises a centralized network configuration (CNC) 22 and a centralized user configuration (CUC) 24.

The station 16a is configured to transmit data packets to and receive data packets from the access point 18a using a WiFi link 26 of the WiFi network 12a. Accordingly, the access point 18a is configured to transmit data packets to and receive data packets from the station 16a using the WiFi link 26 of the WiFi network 12a.

The access point 18a is further configured to transmit data packets to and receive data packets from the TSN switch 20 using a link 28 of the wired TSN domain 14. The TSN switch 20 is configured to transmit to and receive data packets from the station 18a using the wired link 28. Further, the TSN switch 20 is configured to transmit to and receive data packets from the station 18b using a wired link 30 of the wired TSN domain 14. Accordingly, the access point 18b is configured to transmit to and receive data packets from the TSN switch 20 using the wired link 30. Besides, the access point 18b is configured to transmit data packets to and receive data packets from the station 16b using the WiFi link 32 of the WiFi network 12b.

The CNC 22 is configured to transmit control information to and receive control information from the access points 18a, 18b and the TSN switch 20 via respective links 34a, 34b, 36. Accordingly, the access points 18a, 18b and the TSN switch 20 are configured to transmit control information to and receive control information from the CNC 22 via the links 34a, 34b, 36.

Further, the CNC 22 is configured to transmit control information to and receive control information from the CUC 24 via a link 38. The CUC 24 is configured transmit control information to and receive control information from the CNC 24 via the link 38. Moreover, the CUC 24 is configured to transmit control information to and receive control information from the stations 16a, 16b via wireless links 40a, 40b.

Specifically, the CUC 24 is configured to receive requirements from the stations 16a, 16b and to communicate them to the CNC 26. The CNC 26 is configured to receive consolidated requirements from the CUC 24, to schedule streams of data packets in the TSN 10 and to configure the TSN bridge 20.

An application of the TSN 10 may require a stream of data packets from the station 16a via the access point 18a, the TSN switch 20, the access point 18b to the station 16b, and/or vice versa. In other words, the station 16a may represent a talker 16a and the station 16b a listener 16b of the application. Here, the application may require a specific end-to-end QoS (E2E QoS), i.e., regarding the QoS for a transmission of the data packet from the talker 16a to the listener 16b. Specifically, the E2E QoS includes a maximum time between successful transmissions of consecutive data packets from the talker 16a to the listener 16b. Additionally or alternatively, the E2E QoS includes a maximum number of consecutive data packet losses between the talker 16a and the listener 16b.

For the purpose of decreasing the probability of an application failure due to a missed survival time, thus increasing the reliability of the application, it is proposed to provide a requirement information containing a QoS requirement of the application to the access points 18a, 18b. Importantly, this QoS requirement regards at least one of a maximum time between successful transmissions of consecutive data packets in the wireless LAN or a maximum number of consecutive data packet losses in the wireless LANs 12a, 12b, preferably a statistics on the maximum time between successful transmissions of consecutive data packets in the wireless LAN and/or a statistics on the maximum number of consecutive data packet losses in the wireless LANs 12a, 12b.

The consecutive loss statistics constitute an important metric for many mission-critical applications especially in the industrial automation domain. Many of these applications formulate a requirement on the survival time, which is the amount of time for which it can operate without receiving a data packet. When accounting for the packet loss probability only without considering the probability of consecutive packet losses tolerable by or acceptable for the application, resources are not distributed efficiently. In an extreme example, an application with a survival time corresponding to the transmission of two packets can operate without a problem at a packet loss probability of 50%, if no two packets are lost consecutively.

Therefore, the station 16a comprises a radio modem, a non-transitory computer readable medium comprising machine-readable instructions, and a processor configured to load and to execute the machine-readable instructions to cause the station 16a to transmit and/or receive data packets in the WiFi network 12a using resources scheduled based on a QoS requirement of an application of the communication network.

Here, the station 16a is configured to transmit a requirement information containing a QoS requirement of the application regarding
- a maximum time between successful transmissions of consecutive data packets in the wireless LAN and/or
- a maximum number of consecutive data packet losses in the wireless LAN
to the access point 18a. Further, the station 16a is configured to transmit and/or receive a data packet of the application using resources scheduled by the access point 18a based on the QoS requirement contained in the transmitted requirement information.

Accordingly, the access point 18a comprises a radio modem, a non-transitory computer readable medium comprising machine-readable instructions, and a processor configured to load and to execute the machine-readable instructions to cause the access point 18a to schedule resources in the WiFi network 12a based on a QoS requirement of the application of the TSN network 10.

Here, the access point 18a of the TSN 10 is configured to receive a requirement information containing a QoS requirement of the application regarding
- a maximum time between successful transmissions of consecutive data packets in the wireless LAN and/or
- a maximum number of consecutive data packet losses in the wireless LAN
from the station 16a.

Further, the access point 18a of the TSN 10 is configured to schedule resources based on the QoS requirement contained in the received requirement information.

In analogy, the station 16b comprises a radio modem, a non-transitory computer readable medium comprising machine-readable instructions, and a processor configured to load and to execute the machine-readable instructions to cause the station 16b to transmit and/or receive data packets in the WiFi network 12b using resources scheduled based on a QoS requirement of an application of the communication network. In analogy, the access point 18b comprises a radio modem, a non-transitory computer readable medium comprising machine-readable instructions, and a processor configured to load and to execute the machine-readable instructions to cause the access point 18b to schedule resources in the WiFi network 12b based on the QoS requirement of the application of the TSN network 10.

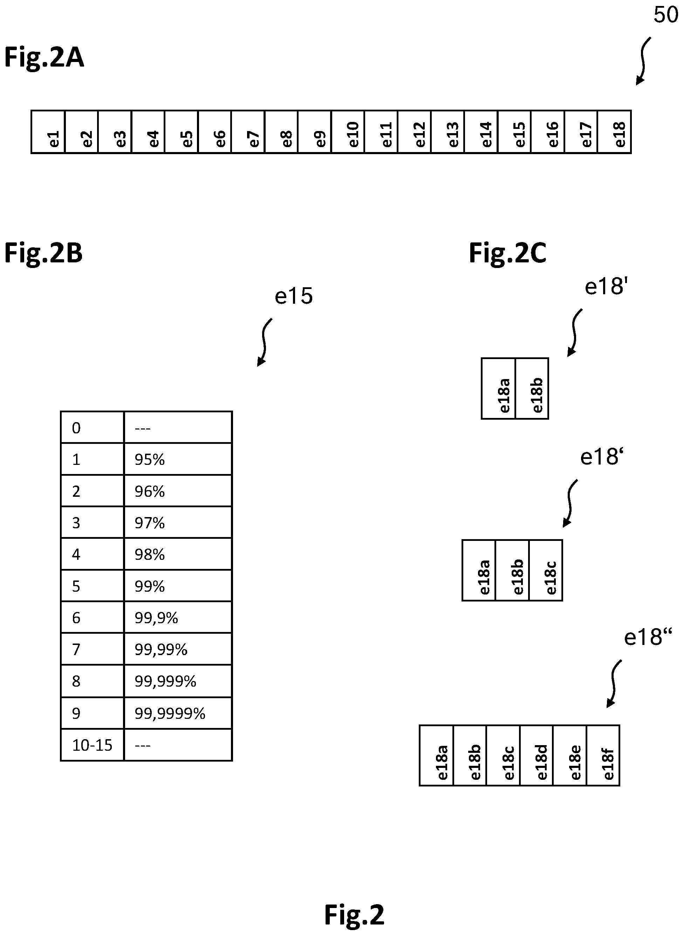

The requirement information used for providing the QoS requirement is preferably part of or configured as a QoS characteristics element as explained in more detail in Fig. 2.

Fig. 2 illustrates a modified QoS characteristics element 50 according to an embodiment of the invention. The QoS characteristics element 50 may be part of a stream classification service (SCS) descriptor element of an SCS request of one of the stations 16a, 16b of the TSN 10 in Fig. 1. Here, the SCS request may relate to a stream of data packets from the talker 16a to the listener 16b for which the application requires a specific E2E QoS.

For the purpose of providing a QoS requirement for the wireless LANs 12a, 12b, i.e., for the wireless part of the transmission path from the talker 16a to the listener 16b, a specific format of the QoS characteristics element 50 is proposed.

The QoS characteristics element 50 comprises multiple subfields e1, e2, ..., e18. The subfields e1, e2, ..., e17 may contain the information as defined in IEEE P802.11be / D3.0, Fig. 9-1002au:
- e1: Element ID (1 octet)
- e2: Length (1 octet)
- e3: Element ID Extension (1 octet)
- e4: Control Info (4 octets)
- e5: Minimum Service Interval (4 octets)
- e6: Maximum Service Interval (5 octets)
- e7: Minimum Data Rate (3 octets)
- e8: Delay Bound (3 octets)
- e9: Maximum MSDU Size (0 or 2 octets)
- e10: Service Start Time (0 or 4 octets)
- e11: Service Start Time LinkID (0 or 1 octet)
- e12: Mean Data Rate (0 or 3 octets)
- e13: Burst Size (0 or 4 octets)
- e14: MSDU Lifetime (0 or 2 octets)
- e15: MSDU Delivery Ratio (0 or 1 octet)
- e16: MSDU Count Exponent (0 or 1 octet)
- e17: Medium Time (0 or 2 octets)

The proposed additional subfield e18 is used for signaling the QoS requirement of the application regarding
- the maximum time between successful transmissions of consecutive MSDUs in the wireless LAN and/or
- the maximum number of MSDU losses in the wireless LAN.

Specifically, the subfield e18 defines a threshold for the time between successful transmissions of consecutive MSDUs in the wireless LAN and/or the number of MSDU losses in the wireless LAN. To this end, the subfield e18 may consist of the maximum time or the maximum number. For providing a more detailed QoS requirement, preferably for providing a statistics on the consecutive MSDUs, the format of subfield e15 may be used.

The information contained in subfield e15 representing the Threshold for MSDU Delivery Ratio is explained with help of Fig. 2B. Precisely, the subfield e15 indicates a threshold for a percentage of MSDUs that are expected to be delivered within the threshold for a delay bound as specified in the field e8 (threshold for Delay Bound).

The first column of Fig. 2B comprises unsigned integers which may be signaled using subfield e15. The second column of Fig. 2B comprises the corresponding percentage of MSDUs that are expected to be delivered within the threshold for a delay bound. As an example, signaling a value of 5 corresponds to expecting 99% of the MSDUs to be delivered within the threshold for the delay bound.

Fig. 2C shows three possible alternatives for the structure of subfield e18. For the first alternative, the subfield e18' consists of two elements. Here, the first element e18a contains an unsigned integer defining the maximum number of tolerable MSDU losses in the wireless LAN or the tolerable maximum time between successful transmissions of consecutive MSDUs in the wireless LAN. The second element e18b contains an unsigned integer which refers to a percentage of MSDUs that are expected not to exceed the maximum number or the maximum time signaled by element e18a.

For the second alternative, the subfield e18" consists of three elements. Here, the first element e18a and the second element e18b correspond to the first alternative e18. In addition, the subfield e18" comprises a third element e18c containing an unsigned integer defining the maximum number of tolerable MSDU losses in the wireless LAN or the tolerable maximum time between successful transmissions of consecutive MSDUs in the wireless LAN. Since there is no corresponding fourth element, the QoS requirement signaled by the third element e18c refers to all, i.e., 100% of the MSDUs in the wireless LAN.

For the third alternative, the subfield e18‴ consist of six elements. Here, the first element e18a and the second element e18b correspond to the first alternative e18. The third element e18c and fifth element e18e also contain an unsigned integer each defining the maximum number of tolerable MSDU losses in the wireless LAN or the tolerable maximum time between successful transmissions of consecutive MSDUs in the wireless LAN. The fourth element e18d and the sixth element e18e contain an unsigned integer each which refers to a percentage of MSDUs that are expected not to exceed the maximum number or the maximum time signaled by element e18c or e18e, respectively. This allows to specify different QoS requirements on different percentages of MSDUs.

In other words, the tolerable losses elements contain an unsigned integer that specifies either the maximum amount of tolerable consecutive losses of MSDUs or the maximum tolerable survival time in microseconds. In the third alternative, up to three different consecutive loss values can be specified with the option to also specify the percentage of MSDUs which should not exceed this value. If no percentage is specified it is assumed that the consecutive loss threshold should never be exceeded.

For the subfields e18a, e18c, e18e 0 or 1 octets may be reserved when signaling the maximum amount of tolerable consecutive losses of MSDUs and 0 or 4 octets when signaling the maximum tolerable survival time. For the subfields e18b, e18d, e18f 0 or 1 octet may be reserved for both variants.

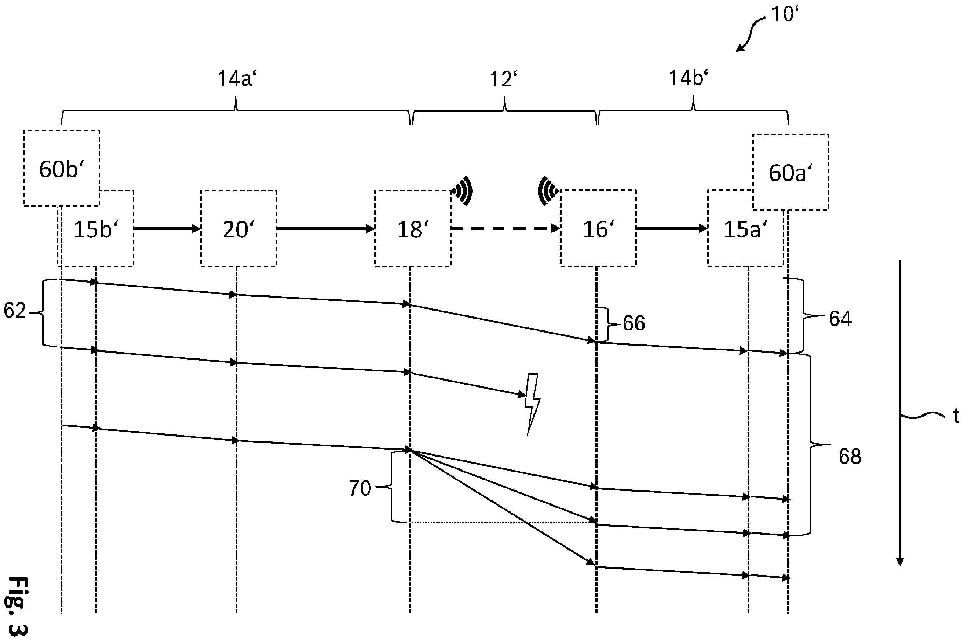

Fig. 3 schematically illustrates a stream of data packets in a communication network 10' according to an aspect of the invention. The communication network 10 is configured as a TSN 10'. The TSN 10' comprises two wired TSN domain 14a', 14b' and a wireless TSN domain 12' connecting the two wired TSN domains 14a', 14b'. The wireless TSN domain 12' is configured a wireless LAN 12', specifically as a WiFi network 12'.

The TSN 10' comprises a first end device 15a' configured as a listener 15a', a station 16', an access point 18', a TSN switch 20', and a second end device 15b' configured as a listener 15b'. The listener 15a' comprises a receiving part XYZ of an application of the TSN'. The listener comprises a transmitting part XYZ of the application of the TSN'.

The TSN 10' is configured to transmit a stream of data packets from the transmitting part 60b' of the talker 15b' via the TSN switch 20', the access point 18', the station 16' to the receiving part 60a' of the listener 15a'. Here, data packets are transmitted periodically with a defined cycle time 62.

When transmitting a data packet of the stream in the TSN 10', each link between two elements of the TSN 10' and/or each element of the TSN 10' generate a delay of the data packet, wherein the sum of the delays corresponds to the transmission time 64. Principally, the delay in the wired TSN domains 14a', 14b' is more deterministic and exhibits less fluctuations in time compared to the delay 66 of the wireless TSN domain 12'.

The first transmission of a data packet of the stream is successful, i.e., the data packet is received by the receiving part 60a' of the listener 15a' in time and without error. The successful transmission may be acknowledged by transmitting an ACK. The second transmission of a data packet of the stream is not successful because the data packet is lost in the wireless TSN domain 12'. A NACK may be transmitted to signal the loss of the second data packet.

According to this embodiment, it is crucial for the application to successfully receive a further data packet within a predefined time 68 - the so-called survival time 68 - after receiving the first data packet successfully. Fig. 3 shows three transmissions with different delays of the third data packet in the wireless TSN domain 12'. For the transmission with the largest delay 70 the third data packet is received after the survival time 68 has lapsed, i.e., the application fails. For the two transmissions with the smaller delay the third data packet is received within the survival time 68, i.e., the application continues to run. Accordingly, a delay bound 70 on the delay of the wireless TSN domain 12' needs to be chosen or specified such that the data packet is received by the receiving part 60a' of the listener 15a' within the survival time 68.

In other words, specifically for wireless LAN networks embedded in a TSN, the success of a transmission from a talker to a listener needs to consider the end-to-end network path comprising both the TSN network and the wireless LAN network as illustrated in Fig. 3. Typically, the end points, i.e., talker and listener, typically define QoS requirements on application level and request resources for the end-to-end path. Therefore, these E2E QoS requirements needs to be decomposed by, e.g., a network management and orchestration function such that appropriate configurations can be derived for the TSN network and the wireless LAN network, respectively. For instance, an end-to-end delay budget needs to be jointly met by both sequential network types. To this end, partial delay budgets for the TSN network and the wireless LAN network may be allocated individually.

For allocating partial delay budgets the survival time is decomposed by considering the maximum number of consecutive packet losses in the wireless LAN that are tolerated by the application, thus decreasing the likelihood of missing the survival time. While the survival time refers to maximum tolerated update time (received packet interval) at the listener, the delay bound as a wireless TSN QoS characteristics element only refers to the wireless TSN system of the end-to-end network path.

Here, the wireless LAN system is either notified about an unsuccessful packet reception by the listener end point, e.g., via the network management and orchestration function, or the access point is configured to monitor packet losses on the wireless link. It shall be noted that the delay bound may refer to a round trip time in the wireless LAN including the confirmation of a successful transmission.

As illustrated in Fig. 3, depending on the size of the delay bound 70, the survival time 68 may be missed if the delay bound 70 is set too large. Or, if the likelihood of missing the survival time 68 is high, decreasing the delay bound 70 in the wireless LAN might help to keep the application running without failure.

For that purpose, the following procedure is proposed:
1. A new packet stream providing E2E QoS requirements of the end-to-end transmission is registered by an application of the communication network.
2. A feasible configuration to meet the E2E QoS requirements of all registered streams is derived by a network management function. To this end, subroutines might be used to get information about the capabilities of the network, e.g., the expected delay per hop. Based on a requested survival time, an appropriate delay bound for the wireless TSN is chosen. The configuration is either confirmed or declined by the wireless TSN.
3. Optionally, during operation, the network might be continuously monitored to be aware of changing network properties, including the likelihood of consecutive packet losses. This can be enhanced by information provided by the end points about a current QoS, specifically about currently observed packet losses.
4. Optionally, based on the previously described update, the residual time budget may be evaluated by the network management function with respect to the survival time. If required, the delay bound on the wireless TSN might be adapted to a new value such that the survival time can be met with sufficiently high probability.

A dynamic adaptation of the delay bound may be implemented according to one of the following alternatives:
Alternative 1: Based on known QoS requirements of the application (e.g., survival time, maximum tolerated consecutive packet losses etc.) and additional network properties (e.g., an expected received packet interval), the delay bound is computed such that the QoS requirements can be met even if a certain number of consecutive packet losses occurs.
Alternative 2: The application QoS requirements and additional network properties are used to derive a primary and a secondary delay bound. While the primary delay bound is set during regular operation of the system, the secondary delay bound is rolled out on-demand to avoid potential application failures based on current observations, e.g., after packet losses have been observed already and the next packet transmission needs to arrive until a given deadline.

For alternative 2, two variants are proposed:
i) The secondary delay bound is computed a priori, i.e., based on initial assumptions. This relaxes the time until a result for the delay bound needs to be available and decreases the computational load during operation.
ii) The secondary delay bound is computed online, i.e., taking recent observations like current network capabilities or parameters into account. This allows to adapt to the current situation in the best possible way.

The approach according to alternative 2 allows to use a (primary) delay bound most of the time, which may be optimal for other metrics like, e.g., resource efficiency and system capacity, while the secondary (non-optimal) delay bound is only used if required.

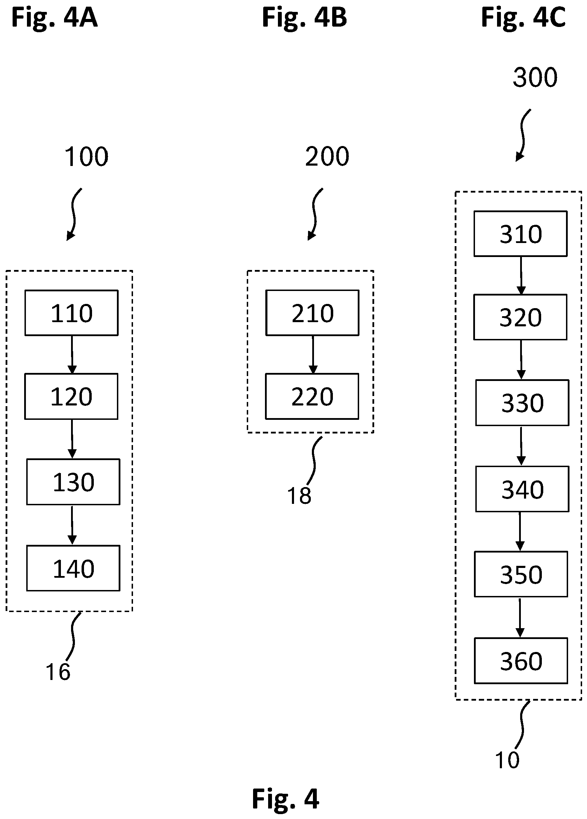

Fig. 4 schematically illustrates methods according to embodiments of the invention.

Fig. 4A schematically illustrates a method 100 of scheduling resources in a communication network based on a QoS requirement of an application of the communication network according to the first aspect of the invention. Here, the communication network comprises a wireless LAN.

The method 100 comprises a step 110 of receiving, by a first wireless LAN element, preferably an access point of the wireless LAN, a requirement information containing a QoS requirement of the application regarding
- a maximum time between successful transmissions of consecutive data packets in the wireless LAN and/or
- a maximum number of consecutive data packet losses in the wireless LAN
from a second wireless LAN element, preferably a station of the wireless LAN.

Further, the method 100 comprises a step 120 of determining, by the access point, a current QoS of the wireless LAN represented by
- the time between successful transmissions of consecutive data packets and/or
- the number of consecutive data packet losses in the wireless LAN.

Besides, the method 100 comprises a step 130 of comparing the determined current QoS and the QoS requirement.

Further, the method 100 comprises a step 140 of scheduling resources, by the first wireless LAN element, preferably the access point, based on the QoS requirement contained in the received requirement information and the determined current QoS. In case the comparison between the determined current QoS and the QoS requirement indicates an imminent or actual violation of the QoS requirement, the scheduling of resources comprises at least one adaption measure to fulfill the QoS requirement.

Fig. 4B schematically illustrates a method 200 of transmitting and/or receiving a data packet in a communication network using resources scheduled based on a QoS requirement of an application of the communication network according to the second aspect of the invention. Here, the communication network comprises a wireless LAN.

The method 200 comprises a step 210 of transmitting, by a station of the wireless LAN, a requirement information containing a QoS requirement of the application regarding
- a maximum time between successful transmissions of consecutive data packets in the wireless LAN and/or
- a maximum number of consecutive data packet losses in the wireless LAN
to an access point of the wireless LAN-

Further, the method 200 comprises a step 220 of transmitting and/or receiving, by the station, a data packet of the application using resources scheduled by the access point based on the QoS requirement contained in the transmitted requirement information.

Fig. 4C schematically illustrates a method 300 of operating a communication network 10. The method 300 of operating the communication network 10 comprises the methods 100, 200 according to the first and the second aspect.

Here, the communication network a wireless LAN with at least one access point and at least one station.

The method 300 comprises a step 310 corresponding to step 210 of the method 200 of transmitting, by the station of the wireless LAN, a requirement information containing a QoS requirement.

The method 300 comprises a step 320 corresponding to step 110 of the method 100 of receiving, by the access point of the wireless LAN, the requirement information.

The method 300 comprises a step 330 corresponding to step 120 of the method 100 of determining, by the access point, a current QoS of the wireless LAN.

The method 300 comprises a step 340 corresponding to step 130 of the method 100 of comparing the determined current QoS and the QoS requirement.

The method 300 comprises a step 340 corresponding to step 140 of the method 100 of scheduling resources, by the first wireless LAN element, preferably the access point, based on the QoS requirement contained in the received requirement information and the determined current QoS.

The method 300 comprises a step 350 corresponding to step 220 of the method 200 of transmitting and/or receiving, by the station, a data packet of the application using resources scheduled by the access point based on the QoS requirement contained in the transmitted requirement information.

## Claims

1. A method (100) of scheduling resources in a communication network based on a quality of service (QoS) requirement of an application of the communication network (10; 10'), wherein the communication network (10; 10') comprises a wireless Local Area Network (LAN) (12a, 12b; 12') and the method (100) comprises:
- Receiving (110), by a first wireless LAN element (18a, 18b; 18'), preferably an access point (18a, 18b; 18') of the wireless LAN (12a, 12b; 12'), a requirement information containing a QoS requirement of the application regarding
∘ a maximum time between successful transmissions of consecutive data packets in the wireless LAN (12a, 12b; 12') and/or
∘ a maximum number of consecutive data packet losses in the wireless LAN (12a, 12b; 12')
from a second wireless LAN element (16a, 16b; 16'), preferably a station (16a, 16b; 16') of the wireless LAN (12a, 12b; 12'); and
- Scheduling (140) resources, by the first wireless LAN element (18a, 18b; 18'), preferably the access point (18a, 18b; 18'), based on the QoS requirement contained in the received requirement information.

2. The method (100) according to claim 1, further comprising a step of determining (120), by the first wireless LAN element (18a, 18b; 18'), a current QoS of the wireless LAN (12a, 12b; 12') represented by
- the time between successful transmissions of consecutive data packets in the wireless LAN (12a, 12b; 12') and/or
- the number of consecutive data packet losses in the wireless LAN (12a, 12b; 12'),
wherein the resources are scheduled further based on the determined current QoS.

3. The method (100) according to one of the proceeding claims, further comprising:
- Obtaining, by the first wireless LAN element (18a, 18b; 18'), a network information representing a configuration and/or property of the communication network (10; 10'); and
- Determining, by the first wireless LAN element (18a, 18b; 18'), a predicted QoS of the wireless LAN (12a, 12b; 12') represented by
∘ the time between successful transmissions of consecutive data packets and/or
∘ the number of consecutive data packet losses in the wireless LAN (12a, 12b; 12')
based on the obtained network information,
wherein the resources are scheduled further based on the determined predicted QoS.

4. The method (100) according to claim 2 or 3, further comprising a step of comparing (130), by the first wireless LAN element (18a, 18b; 18'), the determined current and/or predicted QoS and the QoS requirement, wherein in case the comparison indicates an imminent or actual violation of the QoS requirement, the scheduling of resources comprises at least one adaption measure to fulfill the QoS requirement.

5. The method (100) according to claim 4, wherein the adaption measure includes at least one of:
- Increasing a priority of data packets of the application and/or assigning additional resources for transmitting the data packets of the application, specifically using Orthogonal Frequency-Division Multiple Access (ODFMA) scheduling;
- Duplicating specific or all data packets of the application and transmitting the duplicated data packets via different links in the communication network (10; 10'), specifically in the wireless LAN (12a, 12b; 12');
- Decreasing an order of a modulation and coding scheme (MCS) used for transmitting specific or all data packets of the application;
- Adapting a timer deadline for retransmissions of specific or all data packets of the application.

6. A method (200) of transmitting and/or receiving a data packet in a communication network (10; 10') using resources scheduled based on a quality of service (QoS) requirement of an application of the communication network (10; 10'), wherein the communication network (10; 10') comprises a wireless LAN (12a, 12b; 12') and the method (100) comprises:
- Transmitting (210) a requirement information containing a quality of service (QoS) requirement of the application regarding
∘ a maximum time between successful transmissions of consecutive data packets in the wireless LAN (12a, 12b; 12') and/or
∘ a maximum number of consecutive data packet losses in the wireless LAN (12a, 12b; 12')
to a first wireless LAN element (18a, 18b; 18'), preferably an access point (18a, 18b; 18') of the wireless LAN (12a, 12b; 12'), by a second wireless LAN element (16a, 16b; 16'), preferably a station (16a, 16b; 16') of the wireless LAN (12a, 12b; 12'); and
- Transmitting and/or receiving (220), by the second wireless LAN element (16a, 16b; 16'), a data packet of the application using resources scheduled by the first wireless LAN element (18a, 18b; 18'), preferably the access point (18a, 18b; 18'), based on the QoS requirement contained in the transmitted requirement information.

7. The method(s) (100, 200) according to one of the proceeding claims, wherein the QoS requirement represents
- a maximum time between successful transmissions of two consecutive data packets in the wireless LAN (12a, 12b; 12') and/or
- a maximum number of consecutive data packet losses (threshold) in the wireless LAN (12a, 12b; 12')
for a defined percentage of data packets transmitted in the wireless LAN (12a, 12b; 12') .

8. The method(s) (100, 200) according to one of the proceeding claims, wherein the requirement information comprises
- at least one first data field (e18a, e18c, e18e) representing, preferably comprising a defined maximum number of consecutive data packet losses and
- at least one second data field (e18b, e18d, e18f) representing, preferably indicating a corresponding required percentage of data packets for which the number of consecutive data packet losses shall be smaller or equal to the defined maximum number.

9. The method(s) (100, 200) according to one of the proceeding claims, wherein the requirement information comprises
- at least one first data field (e18a, e18c, e18e) representing, preferably comprising a defined maximum time between successful transmissions of two consecutive data packets and
- at least one second data field (e18b, e18d, e18f representing, preferably indicating a corresponding required percentage of data packets for which the time between successful transmission of two consecutive data packets shall be smaller or equal to the defined maximum time.

10. The method(s) (100, 200) according to one of the proceeding claims, wherein
- the application requires a stream of data packets transmitted via the wireless LAN (12a, 12b; 12'), and
- the requirement information is part of or configured as a QoS characteristics element (50), specifically of a stream classification descriptor element (50), of a stream classification service request of the second wireless LAN element (16a, 16b; 16') related to the required stream of data packets.

11. The method(s) (100, 200) according to one of the proceeding claims, wherein
- the communication network (10; 10') further comprises a wired network (14; 14a', 14b'), specifically a wired time sensitive network (TSN) (14; 14a', 14b'),
- the application requires a stream of data packets between
∘ the first wireless LAN element (18a, 18b; 18') and/or a first network element (16a; 15b') of the communication network (10; 10') and
∘ the second wireless LAN element (16a, 16b; 16') and/or a second network element (15a') of the communication network (10; 10')
via the wired network (14; 14a', 14b'), and the wireless LAN (12a, 12b; 12'),
- the QoS requirement contained in the requirement information is based on an end-to-end QoS (E2E QoS) requirement of the application regarding
∘ a maximum time between successful transmissions of consecutive data packets and/or
∘ a maximum number of consecutive data packet losses between
∘ the first wireless LAN element (18a, 18b; 18') and/or the network (16a; 15b') element and
∘ the second wireless LAN element (16a, 16b; 16') and/or the second network element (15a').

12. A first wireless Local Area Network (LAN) element, preferably access point (18a, 18b; 18') of a wireless LAN (12a, 12b; 12'), comprising
- a radio modem,
- a non-transitory computer readable medium comprising machine-readable instructions, and
- a processor configured to load and to execute the machine-readable instructions to cause the first wireless LAN element (18a, 18b; 18'), preferably the access point (18a, 18b; 18'), to execute the method (100) according to one of claims 1 to 5 or one of claims 7 to 11.

13. A second wireless Local Area Network (LAN) element, preferably station (16a, 16b; 16') of a wireless LAN (12a, 12b; 12'), comprising
- a radio modem,
- a non-transitory computer readable medium comprising machine-readable instructions, and
- a processor configured to load and to execute the machine-readable instructions to cause the second wireless LAN element (16a, 16b; 16'), preferably the access point (18a, 18b; 18'), to execute the method (200) according to one of claims 6 to 11.

14. A computer program comprising machine-readable instructions to cause
- the first wireless LAN element (18a, 18b; 18'), preferably the access point (18a, 18b; 18'), of claim 12 to execute the method (100) according to one of claims 1 to 5 or one of claims 7 to 11, and/or
- the second wireless LAN element (16a, 16b; 16'), preferably the station (16a, 16b; 16'), of claim 13 to execute the method (200) according to one of claims 7 to 11.

15. A frame body, specifically a stream classification service request frame body, of a frame in a communication network (10; 10') comprising a wireless Local Area Network (LAN) (12a, 12b; 12'), wherein
- the frame body comprises a plurality of fields,
- at least one of the fields, preferably a stream classification service descriptor element field, comprises a quality of service (QoS) characteristics element (50) with a requirement information, and
- the requirement information contains a QoS requirement of an application of the communication network (10; 10') regarding
∘ a maximum time between successful transmissions of consecutive data packets in the wireless LAN (12a, 12b; 12') and/or
∘ a maximum number of consecutive data packet losses in the wireless LAN (12a, 12b; 12')
for scheduling resources, by a wireless LAN element (18a, 18b; 18'), preferably an access point (18a, 18b; 18') of the wireless LAN (12a, 12b; 12'), based on the QoS requirement.
